# EUROPEAN PATENT APPLICATION

(11) **EP 4 492 513 A1**
(43) Date of publication of application: **15.01.2025**
(21) Application number: 22931018.0
(22) Date of filing: 21.11.2022
(51) Int. Cl.: H01M 10/04, B29C 48/07, B29C 48/15, H01M 10/052, H01M 10/0562, H01M 10/058

(54) **BATTERY MANUFACTURING SYSTEM**

(30) Priority: 11.03.2022 JP 2022037770
(71) Applicant: The Japan Steel Works, Ltd., Tokyo 141-0032 (JP)
(72) Inventor: UEDA Naoki, Tokyo 141-0032 (JP); NAKAMURA Satoru, Tokyo 141-0032 (JP); FURUKI Kenichi, Tokyo 141-0032 (JP)
(74) Representative: Simmons & Simmons LLP (Munich)
(86) International application number: PCT/JP2022/043071
(87) International publication number: WO 2023/171046

(57) **Abstract**

A battery manufacturing system (1) is for manufacturing a battery material by sequentially executing a plurality of different processes on predetermined raw materials, and is provided with a plurality of processing blocks and a connection block. The processing blocks each have a processing space being shut off from ambient air; a reception port for receiving predetermined materials in the processing space; and a send-out port for sending out a generated product generated by executing predetermined processes on the materials received through the reception port. The connection block (300) has at least an intermediate part (301) that shuts off, from ambient air, a space from the send-out port provided to a processing block on the upstream side to the reception port provided to a processing block on the downstream side, and that has flexibility form conforming to changes in relative positions of the send-out port and the reception port.

## Description

### Technical Field

The present invention relates to a battery manufacturing system.

### Background Art

Progress is being made in developing all-solid-state lithium-ion secondary batteries that are showing promise as next-generation batteries. Accordingly, systems for manufacturing new battery materials are being considered.

For example, Patent Literature 1 discloses the following reactor. The reactor includes a screw feeder main body to become a pressure reaction container, a catalyst supplying unit which introduces a catalyst into the screw feeder main body, and a low hydrocarbon supplying unit which introduces low hydrocarbons into the screw feeder main body. In addition, the reactor includes a screw which transfers generated nanocarbons, a solid sending unit which sends out the catalyst and the nanocarbons transferred by the screw, and a gas sending unit which sends generated hydrogen to the outside of the feeder main body.

### Citation List

### Patent Literature

Patent Literature 1: Japanese Unexamined Patent Application Publication No. 2006-290682

### Summary of Invention

### Technical Problem

Sulfide-based materials are showing promise as solid electrolytes to be used in all-solid-state lithium-ion secondary batteries. With a sulfide-based solid electrolyte, the solid electrolyte may react with moisture in the air and a noxious gas such as hydrogen sulfide may be created in a manufacturing step of an all-solid-state lithium-ion secondary battery. Therefore, in the manufacturing step of an all-solid-state lithium-ion secondary battery, for example, atmosphere control for minimizing the moisture content in the air must be performed. However, controlling an atmosphere of an entire building in which a battery manufacturing facility is installed increases the scale of an atmosphere control facility and raises costs.

The present disclosure has been made in order to solve such a problem and provides a battery manufacturing system capable of performing atmosphere control in an efficient manner.

### Solution to Problem

A battery manufacturing system according to the present disclosure manufactures a battery by sequentially subjecting a predetermined raw material to a plurality of different processing steps and includes a plurality of processing blocks and a connecting block. The processing blocks each include a processing space which is cut off from outside air, a receiving port which receives a predetermined material into the processing space, and a sending port which sends out a product having been produced by subjecting the material received from the receiving port to predetermined processing. The connecting block includes at least an intermediate unit which cuts off a space from the sending port included in the processing block on an upstream side to the receiving port included in the processing block on a downstream side from outside air and which is flexible enough to follow a change in relative positions of the sending port and the receiving port.

### Advantageous Effect of Invention

According to the present disclosure, a battery manufacturing system capable of performing atmosphere control in an efficient manner can be provided.

### Brief Description of the Drawings

Fig. 1 is a manufacturing flow diagram of a battery manufacturing system according to a first embodiment;
Fig. 2 is an overall configuration diagram of the battery manufacturing system according to the first embodiment;
Fig. 3 is a configuration diagram of a raw material feeding block;
Fig. 4 is a configuration diagram of a connecting block;
Fig. 5 is a configuration diagram of a base material feeding block;
Fig. 6 is a configuration diagram of a manufactured article sending block; and
Fig. 7 is an overall configuration diagram of a battery manufacturing system according to a second embodiment.

### Description of Embodiments

Hereinafter, while the present invention will be described through embodiments of the invention, the invention as set forth in the claims is not limited to the following embodiments. Furthermore, not all components described in the embodiments are essential as solutions to the problem. In the following description and in the drawings, omissions and abridgments have been made when appropriate for the sake of clarity. In the respective drawings, the same elements are denoted by the same reference signs and repetitive descriptions are omitted when appropriate.

### <First embodiment>

### (Manufacturing steps)

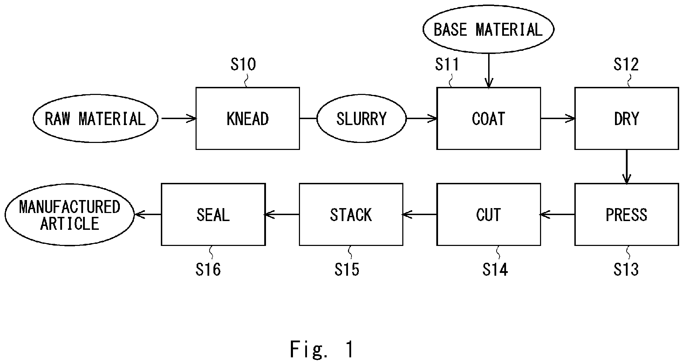

Manufacturing steps of a battery material performed by a battery manufacturing system according to a first embodiment will be described with reference to Fig. 1. Fig. 1 is a manufacturing flow diagram of the battery manufacturing system according to the first embodiment. The battery manufacturing system according to the present embodiment manufactures an all-solid-state battery from a predetermined raw material.

First, the battery manufacturing system receives a raw material and kneads the received raw material (step S10). In this step, by kneading the raw material in an environment set to a predetermined temperature and atmosphere, the battery manufacturing system generates a slurry product.

Next, the battery manufacturing system coats a surface of a sheet-like base material having been received in advance with the slurry product (step S11). At this point, the battery manufacturing system sequentially reels out the base material from the base material processed in a roll. Accordingly, the battery manufacturing system can suitably coat the slurry product sequentially sent out from the kneading step. The battery manufacturing system sequentially sends out a coated article in which the base material has been coated with the slurry product to a drying step that is a next step.

Next, the battery manufacturing system generates a dried article by drying the coated article having been coated with the slurry product (step S12). The battery manufacturing system sequentially sends out the dried article to a pressing step that is a next step.

Next, the battery manufacturing system generates a pressed article by pressing the dried article (step S13). The battery manufacturing system sequentially sends out the pressed article to a cutting step that is a next step.

Next, the battery manufacturing system generates a cut article by cutting the pressed article (step S14). In this case, the battery manufacturing system generates a cut article that is a predetermined rectangular sheet from the product having been reeled out from the roll-shaped base material. The battery manufacturing system sequentially sends out the cut article to a stacking step that is a next step.

Next, the battery manufacturing system stacks the cut article in a predetermined container (step S15). The battery manufacturing system stacks the cut article in the predetermined container, and when a predetermined number of cut articles have been accumulated in the container, the battery manufacturing system performs processing of a next step with respect to the container.

Next, the battery manufacturing system generates a manufactured article by sealing the container in which the cut articles have been accumulated (step S16). Once manufactured articles have been generated, the battery manufacturing system sequentially sends out the generated manufactured articles from the battery manufacturing system.

Manufacturing steps of the battery manufacturing system have been described above. The battery manufacturing system manufactures a sulfide-based all-solid-state lithium-ion secondary battery according to the steps described above. When manufacturing a sulfide-based all-solid-state lithium-ion secondary battery, each step must be executed at a predetermined temperature and in a predetermined atmosphere. In the predetermined atmosphere, a dew-point temperature is, for example, around minus 70 degrees Celsius. In addition, the predetermined temperature is, for example, around 20 to 300 degrees Celsius. Furthermore, when manufacturing a sulfide-based all-solid-state lithium-ion secondary battery, hydrogen sulfide may be generated from the raw material. Due to the circumstances described above, the battery manufacturing system must execute the manufacturing steps described above in an environment cut off from outside air.

### (Overall configuration of system)

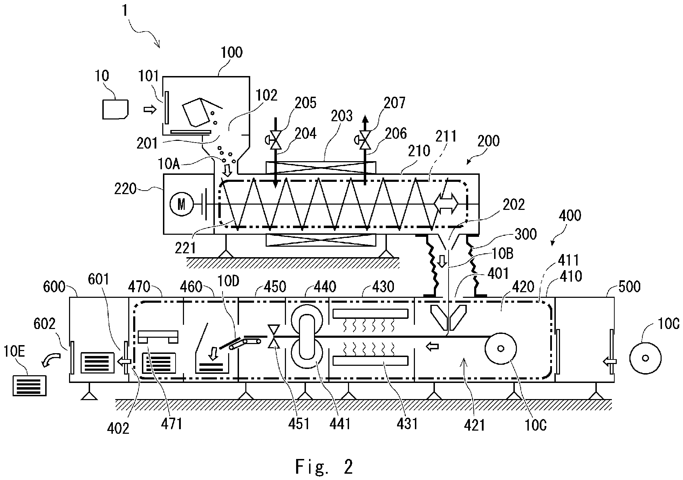

Next, an overall configuration of a battery manufacturing system 1 according to the present embodiment will be described with reference to Fig. 2. Fig. 2 is an overall configuration diagram of the battery manufacturing system 1. The battery manufacturing system 1 shown in Fig. 2 manufactures a battery material by sequentially subjecting a predetermined raw material to a plurality of different processing steps. As primary components, the battery manufacturing system 1 includes a raw material feeding block 100, a first processing block 200, a connecting block 300, a second processing block 400, a base material feeding block 500, and a manufactured article sending block 600.

An outline of the manufacturing steps performed by the battery manufacturing system 1 will now be described while referring to each component of the battery manufacturing system 1. The battery manufacturing system 1 receives a raw material container 10 from a raw material receiving port 101 included in the raw material feeding block 100 and feeds a raw material 10A sealed in the received raw material container 10 to the first processing block 200.

The first processing block 200 executes the "kneading" step shown in Fig. 1 and generates a slurry product 10B. When the first processing block 200 generates the product 10B, the first processing block 200 sends out the generated product 10B from a product sending port 202.

The product 10B sent out from the product sending port 202 passes through the connecting block 300 and is sent to the second processing block 400. When the second processing block 400 receives the product 10B, the second processing block 400 executes the "coating" step of coating a surface of a base material 10C with the product 10B. Note that the base material 10C is constructed in a roll shape and the roll-shaped base material 10C is fed to the second processing block 400 from the base material feeding block 500.

Next, the second processing block 400 sequentially executes "drying", "pressing", "cutting", "stacking", and "sealing" steps shown in Fig. 1 with respect to the base material 10C. Accordingly, the second processing block 400 generates a manufactured article 10E.

The second processing block 400 sends out the generated manufactured article 10E to the manufactured article sending block 600. When the manufactured article sending block 600 receives the manufactured article 10E from a manufactured article receiving port 601, the manufactured article sending block 600 sends out the received manufactured article 10E from a manufactured article sending port 602.

The first processing block 200 and the second processing block 400 continuously perform predetermined processing steps with respect to materials received from the respective receiving ports. Accordingly, the battery manufacturing system 1 continuously sends out products.

### (First processing block)

Next, the first processing block 200 will be described. The first processing block 200 is a kneading apparatus which receives the raw material 10A and generates the product 10B. As primary components, the first processing block 200 includes a material receiving port 201, the product sending port 202, a temperature control apparatus 203, a cover 210, a first processing space 211, a drive apparatus 220, and a screw 221. In addition, as components that control an atmosphere of the first processing space 211, the first processing block 200 includes a fluid supply pipe 204, a supply pipe control valve 205, a fluid discharge pipe 206, and a discharge pipe control valve 207.

The material receiving port 201 is a receiving port for receiving a predetermined material to the first processing space 211. The material receiving port 201 shown in Fig. 2 receives the raw material 10A fed from a raw material feeding port 102 of the raw material feeding block 100. The raw material 10A received by the material receiving port 201 is supplied to the first processing space 211.

The first processing space 211 is a processing space that is cut off from outside air by the cover 210. In the first processing space 211, the first processing block 200 kneads the raw material 10A in a predetermined environment and generates the product 10B.

The cover 210 is a hollow columnar member which extends in a horizontal direction and which constitutes a housing of the first processing block 200. The cover 210 is preferably resistant to hydrogen sulfide gas created internally, predetermined temperature changes, and the like. Therefore, a member that constitutes the cover 210 is an alloy containing, for example, nickel or chromium. For example, the cover 210 may be constituted of a member of which at least an inside material contains carbon or ceramic.

The cover 210 internally forms the first processing space 211 and accommodates the screw 221 in the first processing space 211. In addition, the cover 210 is coupled on an upstream side being one end to the material receiving port 201 and receives materials and coupled on a downstream side being another end to the product sending port 202 for sending out the product 10B.

The cover 210 is covered by the temperature control apparatus 203 in an intermediate portion and is configured such that an interior of the cover 210 can be heated or cooled. In addition, the cover 210 is connected to the fluid supply pipe 204 in the intermediate portion, and when the supply pipe control valve 205 is open, a predetermined fluid is received from the fluid supply pipe 204. The predetermined fluid is, for example, an inert gas such as nitrogen. Furthermore, the cover 210 connects to the fluid discharge pipe 206 in the intermediate portion and discharges, to the fluid discharge pipe 206, a fluid containing hydrogen sulfide gas created in the first processing space 211 due to opening of the discharge pipe control valve 207.

The temperature control apparatus 203 includes a heating apparatus or a cooling apparatus and controls a temperature of the interior of the cover 210 or, in other words, the first processing space 211. The temperature control apparatus 203 includes the heating apparatus so as to surround a circumference of the columnar cover 210 in the intermediate portion of the cover 210. For example, the heating apparatus includes any heater capable of temperature control such as a sheathed heater, a coil heater, or a ceramic heater. For example, the heating apparatus performs heating in a range from room temperature to around 1000 degrees. The temperature control apparatus 203 may set a different temperature for each area in the intermediate portion of the cover 210 in an axial direction of the screw 221.

The drive apparatus 220 includes a motor and a drive force transmitting unit which fits with a drive shaft protruding from the motor and rotates the screw 221. The screw 221 extends from one end to another end of the first processing space 211. By being rotated by the drive apparatus 220, the screw 221 rotates the raw material 10A supplied from the material receiving port 201 so as to be conveyable towards the product sending port 202.

The fluid supply pipe 204 is connected to the cover 210 so as to be capable of supplying a predetermined fluid and, due to opening of the supply pipe control valve 205, the fluid supply pipe 204 supplies the predetermined fluid to the first processing space 211. The fluid discharge pipe 206 is connected to the cover 210 so as to be capable of discharging a fluid present in the first processing space 211 and, due to opening of the discharge pipe control valve 207, the fluid discharge pipe 206 discharges the fluid present in the first processing space 211 to outside of the first processing space 211.

The product sending port 202 is a sending port for sending out the product 10B which is a product generated by subjecting a material received from the material receiving port 201 to predetermined processing. More specifically, the product sending port 202 sends out the slurry product 10B downward from the product sending port 202.

### (Second processing block)

Next, the second processing block 400 will be described. The second processing block 400 receives the product 10B sent out from the first processing block 200, receives the base material 10C from the base material feeding block 500, generates the manufactured article 10E by subjecting the product 10B and the base material 10C to predetermined processing, and sends out the manufactured article 10E. As primary components, the second processing block 400 includes a cover 410, a second processing space 411, a coating unit 420, a drying unit 430, a pressing unit 440, a cutting unit 450, a stacking unit 460, and a sealing unit 470.

The cover 410 is a housing of the second processing block 400 which extends in a horizontal direction and which internally forms the second processing space 411. The cover 410 is preferably resistant to hydrogen sulfide gas created internally, predetermined temperature changes, and the like. Therefore, for example, an inside material of the cover 410 may be constituted of a member which contains carbon or ceramic. In addition, the member that constitutes the cover 410 may be an alloy containing nickel, chromium, or molybdenum. As an alloy, for example, an austenitic stainless steel such as SUS 304 (Japanese Industrial Standards) with relatively high corrosion resistance or a ferritic stainless steel such as SUS 430 (Japanese Industrial Standards) can be adopted.

The cover 410 includes a material receiving port 401 in an upper part on one side and receives the slurry product 10B sent out by the first processing block 200. The cover 410 includes a product sending port 402 on another side and sends out the manufactured article 10E generated in the second processing space 411 from the product sending port 402.

The second processing space 411 is a processing space that is cut off from outside air by the cover 410. The second processing space 411 is provided with the coating unit 420, the drying unit 430, the pressing unit 440, the cutting unit 450, the stacking unit 460, and the sealing unit 470 in order from a side close to the material receiving port 401 toward the product sending port 402 (from right to left in the drawing).

The coating unit 420 includes a coating apparatus 421 and generates a coated article by coating the base material 10C with the product 10B. The drying unit 430 includes a drying apparatus 431 and generates a dried article by drying the coated article. The pressing unit 440 includes a pressing apparatus 441 and generates a pressed article by pressing the dried article. The cutting unit 450 includes a cutting apparatus 451 and generates a cut article by cutting the pressed article. The stacking unit 460 includes a stacking apparatus 461 and generates a stacked article by stacking a cut article 10D in a predetermined container. The sealing unit 470 includes a sealing apparatus 471 and generates a desired manufactured article 10E by sealing the stacked article.

### (Object feeding block)

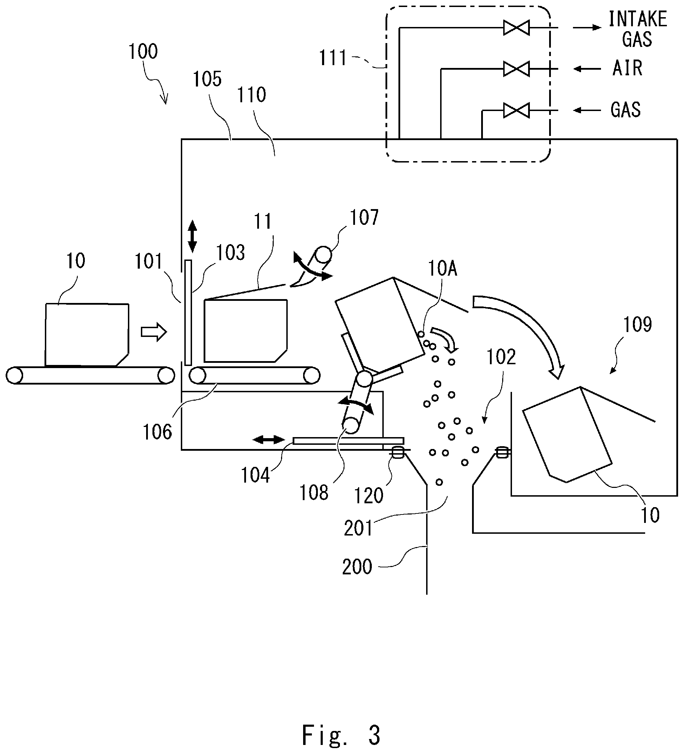

Next, the raw material feeding block 100 will be described with reference to Fig. 3. Fig. 3 is a configuration diagram of the raw material feeding block 100. The raw material feeding block 100 may be referred to as a material feeding block. The material feeding block feeds a predetermined material with respect to processing blocks of the battery manufacturing system 1. As primary components, the raw material feeding block 100 includes the raw material receiving port 101, the raw material feeding port 102, a raw material receiving door 103, a raw material feeding door 104, a cover 105, a conveyor 106, an opening mechanism 107, a robot arm 108, a container storage 109, a feed adjusting unit 110, and an atmosphere adjusting unit 111.

The raw material receiving port 101 is an opening provided on the cover 105. An open/closed state of the raw material receiving port 101 is controlled by the raw material receiving door 103. The raw material receiving port 101 receives the raw material container 10 when the raw material receiving door 103 is open or, in other words, when the raw material receiving door 103 is in an open door state. In addition, the raw material receiving port 101 does not receive the raw material container 10 and cuts off outside air from an atmosphere of the feed adjusting unit 110 when the raw material receiving door 103 is closed or, in other words, when the raw material receiving door 103 is in a closed door state. In other words, the raw material receiving port 101 can also be referred to as an object receiving unit for receiving a predetermined object from the raw material receiving port 101 which is an object receiving port when the raw material receiving door 103 which is an openable and closable object receiving door is in an open door state.

The raw material feeding port 102 is an opening provided on the cover 105. An open/closed state of the raw material feeding port 102 is controlled by the raw material feeding door 104. The raw material feeding port 102 leads to the material receiving port 201 included in the first processing block 200 when the raw material feeding door 104 is in an open door state and sends out the fed raw material 10A to the material receiving port 201. When the raw material feeding door 104 is in a closed door state, the raw material feeding port 102 cuts off an atmosphere of the feed adjusting unit 110 and an atmosphere of the first processing block 200. In other words, the raw material feeding port 102 can also be referred to as a feeding unit for feeding an object from the feed adjusting unit 110 to the first processing block 200 when the raw material feeding door 104 which is an openable and closable feeding door is in an open door state.

The cover 105 is a housing of the raw material feeding block 100 which internally forms the feed adjusting unit 110. The cover 105 is preferably constituted of a member having resistance to hydrogen sulfide gas that may be created in the feed adjusting unit 110. Specifically, for example, the cover 105 may be an alloy containing nickel, chromium, or molybdenum. The cover 105 includes the raw material receiving door 103, the raw material feeding door 104, the conveyor 106, the opening mechanism 107, the robot arm 108, and the container storage 109.

The conveyor 106 conveys the raw material container 10 received via the raw material receiving port 101. The opening mechanism 107 includes a mechanism of opening a lid of the raw material container 10 being sealed or releasing a sealed state. As the opening mechanism 107, various mechanisms can be adopted by a person skilled in the art within a known range in accordance with a form and specifications of the raw material container 10.

The robot arm 108 moves the raw material container 10 inside the feed adjusting unit 110 and feeds the raw material 10A inside the raw material container 10 into the raw material feeding port 102. As the robot arm 108, various mechanisms can be adopted by a person skilled in the art within a known range in accordance with shapes and specifications of the raw material container 10 and the raw material feeding port 102. In addition, after feeding the raw material 10A, the robot arm 108 separates and feeds the raw material container 10 that is now empty into the container storage 109.

The container storage 109 is a space for separating and storing the raw material container 10 after an object has been fed into the processing blocks. The container storage 109 receives and stores the raw material container 10 that has been emptied. A user using the battery manufacturing system 1 retrieves the raw material containers 10 accumulated in the container storage 109 and recycles the raw material containers 10.

The feed adjusting unit 110 includes a space which receives an object from the raw material receiving port 101 that is an object receiving port and which is covered so that the space can be cut off from outside air. In the feed adjusting unit 110, the raw material container 10 is opened by the opening mechanism 107 and the raw material 10A is retrieved by the robot arm 108.

In addition, the raw material feeding block 100 includes the atmosphere adjusting unit 111 for adjusting an atmosphere of the feed adjusting unit 110. The atmosphere adjusting unit 111 includes one or more exhaust ports and an intake port. More specifically, the atmosphere adjusting unit 111 includes an intake port which sucks in gas of the feed adjusting unit 110, an air supply port which supplies air to the feed adjusting unit 110, and a gas supply port which supplies a predetermined gas (for example, an inert gas such as nitrogen) to the feed adjusting unit 110. Accordingly, the atmosphere adjusting unit 111 can set the feed adjusting unit 110 to a vacuum state or to a state equivalent to outside air or fill the feed adjusting unit 110 with inert gas.

Furthermore, the raw material feeding block 100 includes a closed door sensor (not illustrated) which is capable of detecting that the raw material receiving door 103 is in a closed door state. In addition, the raw material feeding block 100 includes a closed door sensor (not illustrated) which is capable of detecting that the raw material feeding door 104 is in a closed door state. Accordingly, for example, the opening mechanism 107 opens the raw material container 10 when the closed door sensors are detecting closed door states. Alternatively, the raw material feeding door 104 which constitutes the feeding unit opens the feeding door when the closed door sensor of the raw material receiving door 103 is detecting a closed door state.

Furthermore, the raw material feeding block 100 may detect the atmosphere of the feed adjusting unit 110 in addition to the open/closed state of the doors described above. Accordingly, the raw material feeding block 100 can detect that the atmosphere of the feed adjusting unit 110 is equivalent to outside air and then perform processing of receiving the raw material container 10. Alternatively, the raw material feeding block 100 can detect that air is not present inside the feed adjusting unit 110 and then perform processing of opening the raw material container 10. In addition, the raw material feeding block 100 can perform processing of feeding the raw material 10A to the material receiving port 201 when the feed adjusting unit 110 is filled with an inert gas.

The raw material feeding block 100 has been described above. Note that the raw material feeding block 100 and the first processing block 200 are connected in proximity of each other in a connecting unit which connects the blocks to each other so as to sandwich a sealing member that has elasticity. In the battery manufacturing system 1, the raw material feeding block 100 and the first processing block 200 are connected by a sealing unit 120. The sealing unit 120 is, for example, an O ring made of nitrile rubber, a fluorine resin, or a silicone resin which has corrosion resistance to hydrogen sulfide. In addition, in the sealing unit 120, an outside of the O ring is fastened by a predetermined fastening member. Due to such a configuration, the battery manufacturing system 1 can suitably feed materials with respect to the first processing block 200.

### (Connecting block)

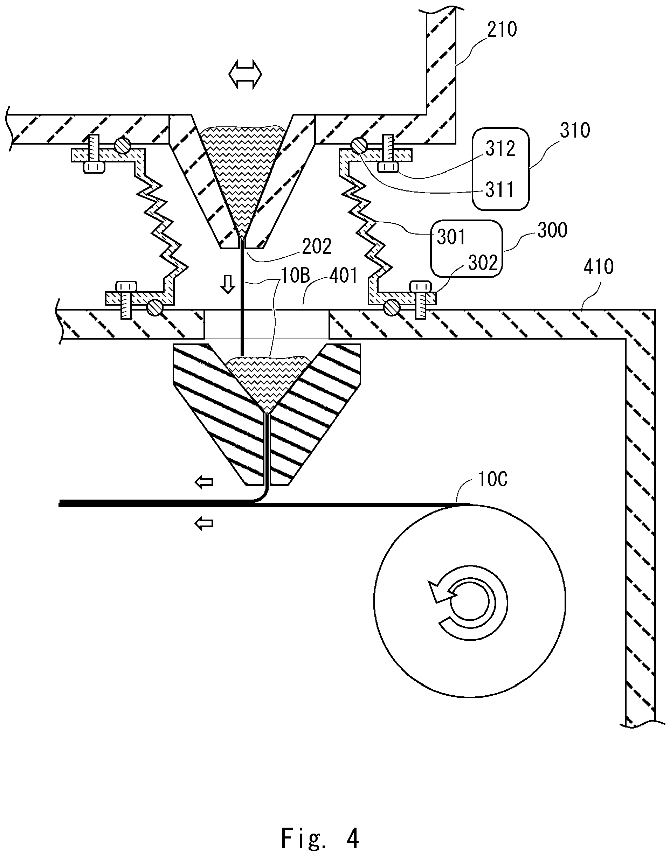

Next, the connecting block 300 will be described with reference to Fig. 4. Fig. 4 is a configuration diagram of the connecting block. The connecting block 300 cuts off, from outside air, a space from the product sending port 202 included in the first processing block 200 that is an upstream-side processing block to the material receiving port 401 included in the second processing block 400 that is a downstream-side processing block. As primary components, the connecting block 300 includes a connecting unit 302 that is an annular flange portion respectively facing the first processing block 200 and the second processing block 400 and a tubular intermediate unit 301 which is erected from the flange portion.

The intermediate unit 301 is a tubular member constructed so as to cover the product sending port 202 and the material receiving port 401. The intermediate unit 301 is flexible enough to follow a change in relative positions of the product sending port 202 and the material receiving port 401. In addition, the intermediate unit 301 preferably has resistance to sulfur components derived from the product 10B. Specifically, for example, the intermediate unit 301 may be formed of a silicone-based material, a nitrile-based material, or a resin material containing fluorine. Alternatively, the intermediate unit 301 may be formed of an alloy containing, in terms of percent by weight, 10% to 30% of chromium but no molybdenum. More preferably, the intermediate unit 301 may be formed of an alloy containing, in terms of percent by weight, 12% to 26% of chromium and 3% or more of nickel but no molybdenum. Furthermore, in this case, the intermediate unit 301 may include a portion formed in a bellows shape in an extending direction. Accordingly, the intermediate unit 301 can suitably follow a change in relative positions of the first processing block 200 and the second processing block 400.

The connecting unit 302 is an annular flange portion which is formed at an end of the intermediate unit 301 and which is preferably integrally molded with the intermediate unit 301. The first processing block 200 and the connecting block 300 are connected in the connecting unit 302 by a connecting member 310. The connecting member 310 includes an O ring 311 and a bolt 312. The O ring 311 is an annular sealing member arranged along the flange portion and has elasticity. For example, the O ring 311 can be formed of rubber containing silicone, nitrile, or fluorine which has high corrosion resistance to sulfur components derived from the product 10B.

The first processing block 200 and the connecting block 300 are fastened in the connecting unit 302 by the bolt 312 that is a fastening member on an outer circumferential side of the O ring 311. Accordingly, the first processing block 200 and the connecting block 300 are connected in proximity of each other so as to sandwich the O ring 311 that is a sealing member having elasticity. Note that the configuration described above can also be adopted between the connecting block 300 and the second processing block 400.

Due to the configuration described above, the first processing block 200 sends out the slurry product 10B from the product sending port 202. In addition, the second processing block 400 receives the product 10B in the material receiving port 401 provided below the product sending port 202. Since the temperature of the first processing block 200 changes drastically, the position of the first processing block 200 tends to change particularly in the horizontal direction. In this case, the connecting block 300 suitably follows a change in relative positions of the first processing block 200 and the second processing block 400 while cutting off a space between the product sending port 202 and the material receiving port 401 from outside air.

### (Base material feeding block)

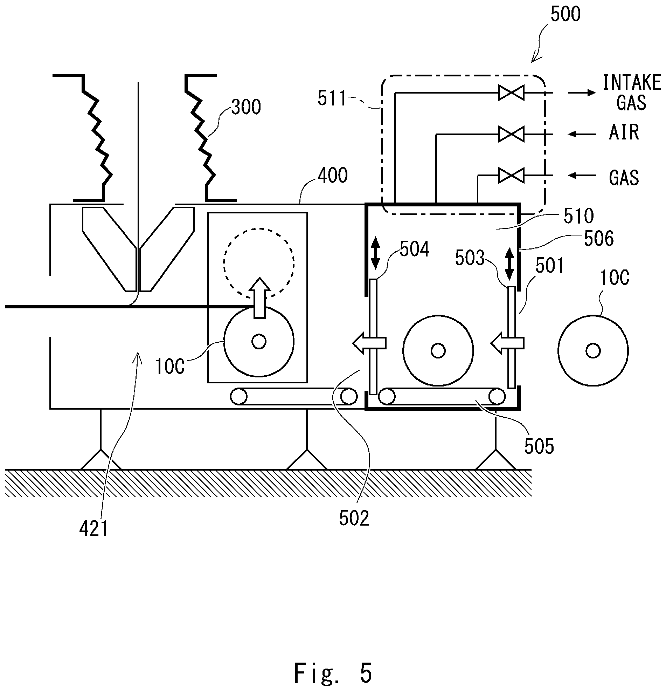

Next, the base material feeding block 500 will be described with reference to Fig. 5. Fig. 5 is a configuration diagram of the base material feeding block 500. The base material feeding block 500 is an embodiment of the material feeding block. The base material feeding block 500 includes a base material receiving port 501, a base material feeding port 502, a base material receiving door 503, a conveyor 505, a feed adjusting unit 510, and an atmosphere adjusting unit 511.

The base material receiving port 501 is an opening provided on the cover 506. An open/closed state of the base material receiving port 501 is controlled by the base material receiving door 503. The base material receiving port 501 receives the base material 10C when the base material receiving door 503 is in an open door state. In addition, the base material receiving port 501 does not receive the base material 10C and cuts off outside air from an atmosphere of the base material feeding block 500 when the base material receiving door 503 is in a closed door state. In other words, the base material receiving port 501 can also be referred to as an object receiving unit for receiving a predetermined object from the base material receiving port 501 which is an object receiving port when the base material receiving door 503 which is an openable and closable object receiving door is in an open door state.

The base material feeding port 502 is an opening provided on the cover 506. An open/closed state of the base material feeding port 502 is controlled by the base material feeding door 504. The base material feeding port 502 leads to the coating unit 420 included in the second processing block 400 when the base material feeding door 504 is in an open door state and sends out the base material 10C to the coating apparatus 421 of the coating unit 420. When the base material feeding door 504 is in a closed door state, the base material feeding port 502 cuts off an atmosphere of the feed adjusting unit 510 and an atmosphere of the second processing block 400. In other words, the base material feeding port 502 can also be referred to as a feeding unit for feeding an object from the feed adjusting unit 510 to the second processing block 400 when the base material feeding door 504 which is an openable and closable feeding door is in an open door state.

The cover 506 is a housing of the base material feeding block 500 which internally forms the feed adjusting unit 510. The cover 506 is preferably constituted of a member having resistance to hydrogen sulfide gas that may be created in the feed adjusting unit 510. Specifically, for example, the cover 506 may be made of SUS 316 (Japanese Industrial Standards). The cover 506 includes the base material receiving door 503, the base material feeding door 504, and the conveyor 505. The conveyor 505 conveys the base material 10C received via the base material receiving port 501.

In addition, the base material feeding block 500 includes the atmosphere adjusting unit 511 for adjusting an atmosphere of the feed adjusting unit 510. The atmosphere adjusting unit 511 has a similar configuration and similar functions to the atmosphere adjusting unit 111 described above. In other words, the atmosphere adjusting unit 511 includes an intake port which sucks in gas of the feed adjusting unit 510, an air supply port which supplies air to the feed adjusting unit 510, and a gas supply port which supplies a predetermined gas (for example, an inert gas such as nitrogen) to the feed adjusting unit 510. Accordingly, the atmosphere adjusting unit 511 can set the feed adjusting unit 510 to a vacuum state or to a state equivalent to outside air or fill the feed adjusting unit 510 with inert gas.

In addition, the base material feeding block 500 includes a closed door sensor (not illustrated) which is capable of detecting that the base material receiving door 503 is in a closed door state and a closed door sensor (not illustrated) which is capable of detecting that the base material feeding door 504 is in a closed door state. Accordingly, the base material feeding door 504 which constitutes the feeding unit opens the feeding door when the closed door sensor of the base material receiving door 503 is detecting a closed door state.

Furthermore, the base material feeding block 500 may detect the atmosphere of the feed adjusting unit 510 in addition to the open/closed state of the doors described above. Accordingly, the base material feeding block 500 can detect that the atmosphere of the feed adjusting unit 510 is equivalent to outside air and then perform processing of receiving the base material 10C. In addition, the base material feeding block 500 can perform processing of feeding the base material 10C to the second processing block 400 when the feed adjusting unit 510 is filled with an inert gas.

The base material feeding block 500 has been described above. The base material feeding block 500 and the second processing block 400 may be formed so that housings are integrated with each other. In other words, for example, the cover 410 included in the second processing block 400 and the cover 506 included in the base material feeding block 500 may be integrally formed so that the inside atmospheres can be cut off from outside air. In addition, the base material feeding block 500 and the second processing block 400 may be constructed so as to be separable from each other. In this case, the base material feeding block 500 and the second processing block 400 are preferably connected by a component equivalent to, for example, the sealing unit 120 shown in Fig. 3 or the connecting member 310 shown in Fig. 4. Accordingly, the base material feeding block 500 can feed the base material 10C while suitably cutting off the atmosphere inside the battery manufacturing system 1 from outside air.

When the second processing block 400 receives the base material 10C from the base material feeding block 500, the coating apparatus 421 has a function of removing a used roll and loading the newly-received base material 10C to the coating apparatus 421. Since such a mechanism represents contents that are well known by those skilled in the art in the coating apparatus 421, a detailed description thereof will be omitted.

### (Product sending block)

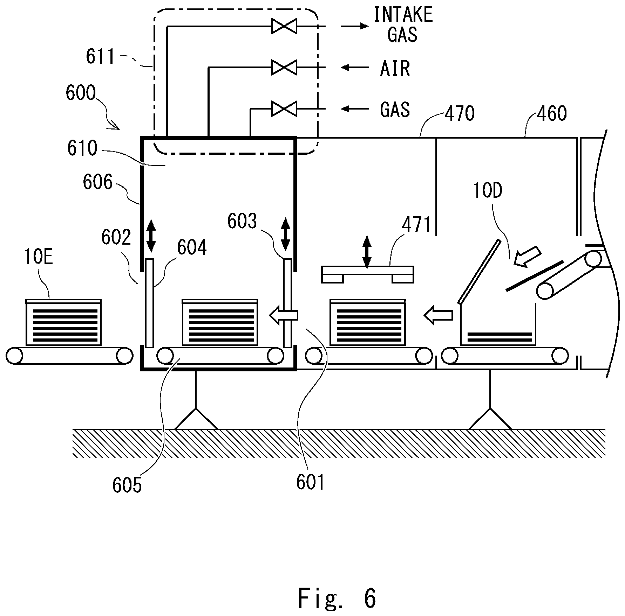

Next, the manufactured article sending block 600 will be described with reference to Fig. 6. Fig. 6 is a configuration diagram of the manufactured article sending block 600. The manufactured article sending block 600 is an embodiment of the product sending block. As primary components, the manufactured article sending block 600 includes the manufactured article receiving port 601, the manufactured article sending port 602, a manufactured article receiving door 603, a manufactured article sending door 604, a conveyor 605, a cover 606, a send adjusting unit 610, and an atmosphere adjusting unit 611.

The manufactured article receiving port 601 is an opening provided on the cover 606. An open/closed state of the manufactured article receiving port 601 is controlled by the manufactured article receiving door 603. The manufactured article receiving port 601 receives the manufactured article 10E from the sealing unit 470 of the second processing block 400 when the manufactured article receiving door 603 is in an open door state. In addition, the manufactured article receiving port 601 does not receive the manufactured article 10E and cuts off the atmosphere of the second processing block 400 and the atmosphere of the manufactured article sending block 600 when the manufactured article receiving door 603 is in a closed door state. In other words, the manufactured article receiving port 601 can also be referred to as a product receiving unit for receiving the manufactured article 10E from the manufactured article receiving port 601 which is a product receiving port when the manufactured article receiving door 603 which is an openable and closable product receiving door is in an open door state.

The manufactured article sending port 602 is an opening provided on the cover 606. An open/closed state of the manufactured article sending port 602 is controlled by the manufactured article sending door 604. The manufactured article sending port 602 leads to outside of the battery manufacturing system 1 and sends out the manufactured article 10E to the outside when the manufactured article sending door 604 is in an open state. When the manufactured article sending door 604 is in a closed door state, the manufactured article sending port 602 cuts off an atmosphere of the send adjusting unit 610 from outside air. In other words, the manufactured article sending port 602 can be described as a sending unit for sending out the manufactured article 10E from the send adjusting unit 610 to the outside of the battery manufacturing system 1 when the manufactured article sending door 604 which is an openable and closable sending door is in an open state.

The cover 606 is a housing of the manufactured article sending block 600 which internally forms the send adjusting unit 610. The cover 606 is preferably constituted of a member having resistance to hydrogen sulfide gas that may be created in the send adjusting unit 610. Specifically, for example, the cover 606 may be made of SUS 316 (Japanese Industrial Standards). The cover 606 includes the manufactured article receiving door 603, the manufactured article sending door 604, and the conveyor 605. The conveyor 605 conveys the manufactured article 10E received via the manufactured article receiving port 601.

In addition, the manufactured article sending block 600 includes the atmosphere adjusting unit 611 for adjusting an atmosphere of the send adjusting unit 610. The atmosphere adjusting unit 611 has a similar configuration and similar functions to the atmosphere adjusting unit 111 described above. In other words, the atmosphere adjusting unit 611 includes an intake port which sucks in gas of the send adjusting unit 610, an air supply port which supplies air to the send adjusting unit 610, and a gas supply port which supplies a predetermined gas (for example, an inert gas such as nitrogen) to the send adjusting unit 610. Accordingly, the atmosphere adjusting unit 611 can set the send adjusting unit 610 to a vacuum state or to a state equivalent to outside air or fill the send adjusting unit 610 with inert gas.

In addition, the manufactured article sending block 600 includes a closed door sensor (not illustrated) which is capable of detecting that the manufactured article receiving door 603 is in a closed door state and a closed door sensor (not illustrated) which is capable of detecting that the manufactured article sending door 604 is in a closed door state. Accordingly, the manufactured article sending door 604 which constitutes the sending unit opens the sending door when the closed door sensor of the manufactured article receiving door 603 is detecting a closed door state.

Furthermore, the manufactured article sending block 600 may detect the atmosphere of the send adjusting unit 610 in addition to the open/closed state of the doors described above. Accordingly, when the manufactured article sending block 600 detects that the send adjusting unit 610 is filled with an inert gas, the manufactured article sending block 600 can perform processing of receiving the manufactured article 10E. In addition, the manufactured article sending block 600 can perform processing of sending out the manufactured article 10E when the atmosphere of the send adjusting unit 610 is equivalent to outside air.

While the battery manufacturing system 1 has been described above, the battery manufacturing system 1 is not limited to the configuration described above. For example, steps included in the battery manufacturing system 1 are merely examples and the steps included in the battery manufacturing system 1, the apparatuses involved in such steps, and the like are not limited to the contents described above. Therefore, when appropriate, the battery manufacturing system 1 may provide a plurality of components equivalent to the connecting block 300 midway through the steps. When appropriate, the battery manufacturing system 1 may provide an object feeding block for feeding a predetermined object midway through the steps. Alternatively, the battery manufacturing system 1 may provide a product sending block for sending out or discarding a predetermined product or a predetermined object midway through the steps. In addition, for example, the battery manufacturing system 1 may generate a roll-shaped article as the manufactured article instead of a sheet-like cut article.

For example, the battery manufacturing system 1 may separate a step included in the second processing block 400 and connect the separated portion using a member equivalent to the connecting block 300. Due to such a configuration, the battery manufacturing system 1 can be modularized and, at the same time, the atmosphere inside the battery manufacturing system 1 can be cut off from outside air in a suitable manner.

In addition, while a manufacturing system of a sulfide-based solid electrolyte has been described in the example presented above, the battery manufacturing system 1 according to the present embodiment can also be adopted as a manufacturing system of a solid electrolyte other than a sulfide-based solid electrolyte.

According to the first embodiment described above, atmosphere control can be performed in an efficient manner without the need for a large-scale facility. In addition, according to the embodiment, a battery manufacturing system capable of continuously manufacturing battery materials in an efficient manner can be provided.

### <Second embodiment>

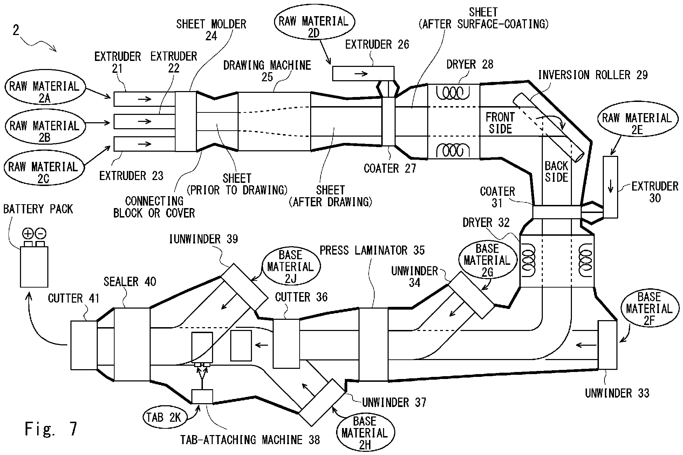

Fig. 7 is an overall configuration diagram of a battery manufacturing system according to a second embodiment. A battery manufacturing system 2 shown in Fig. 7 manufactures a battery from a plurality of raw materials. As main components, the battery manufacturing system 2 includes extruders 21 to 23, a sheet molder 24, a drawing machine 25, an extruder 26, a coater 27, a dryer 28, an inversion roller 29, an extruder 30, a coater 31, and a dryer 32. The battery manufacturing system 2 further includes unwinders 33 and 34, a press laminator 35, a cutter 36, an unwinder 37, a tab-attaching machine 38, an unwinder 39, a sealer 40, and a cutter 41. Each of the components described above which are included in the battery manufacturing system 2 can be considered a processing block.

In addition to the components described above, the battery manufacturing system 2 also includes, at predetermined locations, the raw material feeding block described with reference to Fig. 3, the connecting block described with reference to Fig. 4, the base material feeding block described with reference to Fig. 5, and the manufactured article sending block described with reference to Fig. 6. More specifically, the battery manufacturing system 2 includes a raw material feeding port at each of the locations where the extruders 21 to 23, 26, and 30 receive a raw material.

In addition, the battery manufacturing system 2 includes the base material feeding block in the unwinders 33, 34, 37, and 39. Furthermore, the battery manufacturing system 2 can include a component for receiving tabs 11 in the tab-attaching machine 38. The component for receiving tabs may be a component similar to the raw material feeding block or a component similar to the base material feeding block. In addition, the battery manufacturing system 2 includes the manufactured article sending block on a downstream side of the cutter 41.

Furthermore, the battery manufacturing system 2 may include a connecting block in portions that connect adjacent processing blocks to each other. In addition, in place of the connecting block, the battery manufacturing system 2 may include a cover for cutting off outside air in portions that connect adjacent processing blocks to each other. In Fig. 7, the portions that connect respective processing blocks to each other are indicated by thick solid lines. In the battery manufacturing system 2, the portions indicated by the thick solid lines may be connecting blocks or covers for cutting off outside air.

Hereinafter, a configuration of the battery manufacturing system 2 will be described along a flow of manufacturing steps. In the configuration described above, the extruder 21 receives a raw material 2A. In a similar manner, the extruder 22 receives a raw material 2B. The extruder 23 receives a raw material 2C. Furthermore, each of the extruders 21 to 23 kneads the raw material and supplies a product to the sheet molder 24 on a downstream side.

The sheet molder 24 generates a sheet from the products received from the extruders 21 to 23 and supplies the sheet to the drawing machine 25. The drawing machine 25 draws and sends out the sheet supplied from the sheet molder 24 and supplies the sent-out sheet to the coater 27.

The coater 27 receives a raw material 2D from the extruder 26 and coats a surface of the sheet with the received raw material 2D. After the coater 27 coats the surface of the sheet with the raw material 2D, the surface-coated sheet is supplied to the dryer 28. The dryer 28 dries the coated raw material and fixes the raw material to the sheet. The inversion roller 29 reverses front and back sides of the sheet having passed through the dryer 28.

The sheet of which the front and back sides have been reversed and the back side now facing upward is supplied to the coater 31. A raw material 2E is supplied to the coater 31 from the extruder 30. The coater 31 coats the sheet with the raw material 2E. The sheet coated with the raw material 2E is supplied to the dryer 32. The dryer 32 dries the coated sheet and fixes the raw material 2E to the sheet.

Next, the unwinder 33 reels out a sheet-like base material 2F to a side of a lower surface of the sheet having passed through the dryer 32. In addition, the unwinder 34 reels out a sheet-like base material 2G to a side of an upper surface of the sheet having passed through the dryer 32.

Next, the press laminator 35 laminates the base materials reeled out onto the upper and lower surfaces, subjects the laminated sheet to pressure bonding, and sends out the pressure-bonded sheet to the cutter 36. The cutter 36 cuts the sheet having been pressure-bonded by the press laminator 35 to a predetermined size. The cut sheet is conveyed by a base material 2H reeled out by the unwinder 37. The base material 2H may be described as a conveyance film.

A tab 11 is attached by the tab-attaching machine 38 to the cut sheet conveyed by the base material 2H which is a conveyance film. The tab 11 refers to a terminal portion of a battery. An upper surface of the tabbed cut sheet is covered by a base material 2J reeled out by the unwinder 39. The tabbed cut sheet of which upper and lower surfaces are covered by the base material 2H and the base material 2J are supplied to the sealer 40.

The sealer 40 seals the cut sheet using the base material 2H and the base material 2J. Next, the sealer 40 supplies a sheet created by sealing the cut sheet to the cutter 41. The cutter 41 cuts the received sheet to a predetermined size and sends out the cut sheet to outside of the battery manufacturing system 2.

The second embodiment has been described above. According to the second embodiment, atmosphere control of the interior of the processing blocks can be performed while cutting off the manufacturing system from outside air. Therefore, according to the second embodiment, a battery manufacturing system capable of continuously manufacturing battery materials in an efficient manner can be provided.

While the present invention has been described above with reference to the embodiments, the present invention is not limited to the above embodiments. Various modifications to the configurations and details of the present invention will occur to and can be made by those skilled in the art within the scope of the invention.

The present application claims priority on the basis of Japanese Patent Application No. 2022-037770 filed on March 11, 2022, the entire contents of which are incorporated herein by reference.

### Reference Signs List

1 BATTERY MANUFACTURING SYSTEM
2 BATTERY MANUFACTURING SYSTEM
10 RAW MATERIAL CONTAINER
10A RAW MATERIAL
10B PRODUCT
10C BASE MATERIAL
10D CUT ARTICLE
10E MANUFACTURED ARTICLE
21, 22, 23, 26, 30 EXTRUDER
24 SHEET MOLDER
27, 31COATER
33, 34, 37, 39 UNWINDER
35 PRESS LAMINATOR
41 CUTTER
100 RAW MATERIAL FEEDING BLOCK
101 RAW MATERIAL RECEIVING PORT
102 RAW MATERIAL FEEDING PORT
103 RAW MATERIAL RECEIVING DOOR
104 RAW MATERIAL FEEDING DOOR
105 COVER
106 CONVEYOR
107 OPENING MECHANISM
108 ROBOT ARM
109 CONTAINER STORAGE
110 FEED ADJUSTING UNIT
111 ATMOSPHERE ADJUSTING UNIT
120 SEALING UNIT
200 FIRST PROCESSING BLOCK
201 MATERIAL RECEIVING PORT
202 PRODUCT SENDING PORT
203 TEMPERATURE CONTROL APPARATUS
204 FLUID SUPPLY PIPE
205 SUPPLY PIPE CONTROL VALVE
206 FLUID DISCHARGE PIPE
207 DISCHARGE PIPE CONTROL VALVE
210 COVER
211 FIRST PROCESSING SPACE
220 DRIVE APPARATUS
221 SCREW
300 CONNECTING BLOCK
301 INTERMEDIATE UNIT
302 CONNECTING UNIT
310 CONNECTING MEMBER
311 O RING
312 BOLT
400 SECOND PROCESSING BLOCK
401 MATERIAL RECEIVING PORT
402 PRODUCT SENDING PORT
410 COVER
411 SECOND PROCESSING SPACE
420 COATING UNIT
421 COATING APPARATUS
422 COATING DIE
430 DRYING UNIT
431 DRYING APPARATUS
440 PRESSING UNIT
441 PRESSING APPARATUS
450 CUTTING UNIT
451 CUTTING APPARATUS
460 STACKING UNIT
461 STACKING APPARATUS
470 SEALING UNIT
471 SEALING APPARATUS
500 BASE MATERIAL FEEDING BLOCK
501 BASE MATERIAL RECEIVING PORT
502 BASE MATERIAL FEEDING PORT
503 BASE MATERIAL RECEIVING DOOR
504 BASE MATERIAL FEEDING DOOR
505 CONVEYOR
506 COVER
510 FEED ADJUSTING UNIT
511 ATMOSPHERE ADJUSTING UNIT
600 MANUFACTURED ARTICLE SENDING BLOCK
601 MANUFACTURED ARTICLE RECEIVING PORT
602 MANUFACTURED ARTICLE SENDING PORT
603 MANUFACTURED ARTICLE RECEIVING DOOR
604 MANUFACTURED ARTICLE SENDING DOOR
605 CONVEYOR
606 COVER
610 SEND ADJUSTING UNIT
611 ATMOSPHERE ADJUSTING UNIT

## Claims

1. A battery manufacturing system which manufactures a battery by sequentially subjecting a predetermined material to a plurality of different processing steps, the battery manufacturing system comprising:
a plurality of processing blocks, each including a processing space which is cut off from outside air, a receiving port configured to receive a predetermined material into the processing space, and a sending port configured to send out a product having been produced by subjecting the material received from the receiving port to predetermined processing; and
a connecting block including at least an intermediate unit which is configured to cut off a space from the sending port included in the processing block on an upstream side to the receiving port included in the processing block on a downstream side from outside air and which is flexible enough to follow a change in relative positions of the sending port and the receiving port.

2. The battery manufacturing system according to claim 1, wherein
each processing block is configured to continuously send out the product from the sending port by continuously subjecting the material received from the receiving port to predetermined processing.

3. The battery manufacturing system according to claim 1 or 2, wherein
the connecting block includes an annular flange portion which faces each processing block and a tubular intermediate unit which is erected from the flange portion.

4. The battery manufacturing system according to claim 3, wherein
the intermediate unit is formed of a material containing at least one of a nitrile resin, a silicone resin, or a fluorine resin.

5. The battery manufacturing system according to claim 3, wherein
the intermediate unit is formed of a metal containing, in terms of percent by weight, 10% to 30% of chromium but no molybdenum.

6. The battery manufacturing system according to any one of claims 3 to 5, wherein
the intermediate unit includes a portion formed in a bellows shape in an extending direction.

7. The battery manufacturing system according to any one of claims 1 to 6, wherein
each processing block and the connecting block are connected in proximity of each other in a connecting unit so as to sandwich a sealing member that has elasticity.

8. The battery manufacturing system according to claim 7, wherein
each processing block and the connecting block are fastened by a fastening member on an outer circumferential side of an annular sealing member.

9. The battery manufacturing system according to any one of claims 1 to 8, further comprising an object feeding block that includes:
an object receiving unit configured to receive a predetermined object from an object receiving port when an openable and closable object receiving door is in an open door state;
a feed adjusting unit which is configured to receive the object from the object receiving unit and which has a space being covered so that the space can be cut off from outside air; and
a feeding unit configured to feed the object from the feed adjusting unit to the processing block when an openable and closable feeding door is in an open door state.

10. The battery manufacturing system according to claim 9, wherein
the object receiving unit is configured to be capable of receiving a container that accommodates the object, and
the object feeding block further includes an opening mechanism configured to open the container in the feed adjusting unit.

11. The battery manufacturing system according to claim 10, wherein
the object feeding block includes a closed door sensor configured to be capable of detecting that the object receiving door is in a closed door state, and
the opening mechanism is configured to open the container when the closed door sensor is detecting a closed door state.

12. The battery manufacturing system according to claim 11, wherein
the feeding unit is configured to open the feeding door when the closed door sensor is detecting a closed door state.

13. The battery manufacturing system according to any one of claims 10 to 12, wherein
the object feeding block further includes a container storage configured to separate the container after the object has been fed to the processing block.

14. The battery manufacturing system according to any one of claims 10 to 13, wherein
the object feeding block includes one or more exhaust ports and an intake port configured to adjust an atmosphere in the feed adjusting unit.

15. The battery manufacturing system according to any one of claims 9 to 14, wherein
the object feeding block and the processing block are connected in proximity of each other in a connecting unit configured to connect the blocks to each other so as to sandwich a sealing member that has elasticity.

16. The battery manufacturing system according to any one of claims 1 to 14, further comprising a product sending block that includes:
a product receiving unit configured to receive the product from the processing block when an openable and closable product receiving door is in an open door state;
a send adjusting unit which is configured to be capable of receiving the product from the product receiving unit and which has a space being covered so that the space can be cut off from outside air; and
a product sending port configured to send out the product to outside from the send adjusting unit when an openable and closable sending door is in an open door state.

17. The battery manufacturing system according to claim 16, wherein
the product sending block includes one or more exhaust ports and an intake port configured to adjust an atmosphere in the send adjusting unit.

18. The battery manufacturing system according to claim 16 or 17, wherein
the product sending block and the processing block are connected in proximity of each other in a connecting unit configured to connect the blocks to each other so as to sandwich a sealing member that has elasticity.

19. The battery manufacturing system according to any one of claims 1 to 18, wherein
the plurality of processing blocks include:
a first processing block including an extruder configured to send out the product generated by kneading a predetermined first raw material;
a second processing block including a sheet molder configured to generate a sheet from the product received from the extruder;
a third processing block including a coater configured to coat a surface of the sheet with a predetermined second raw material;
a fourth processing block including a press laminator configured to laminate onto the sheet, after the coated second raw material has been dried, a first base material and a second base material having been respectively reeled out onto upper and lower surfaces of the sheet, subject the laminated sheet to pressure bonding, and send out the pressure-bonded sheet; and
a fifth processing block including a cutter configured to cut the sheet to which the first base material and the second base material have been pressure-bonded to a predetermined size.
